# EUROPEAN PATENT APPLICATION

(11) **EP 2 887 566 A1**
(43) Date of publication of application: **24.06.2015**
(21) Application number: 13382551.3
(22) Date of filing: 23.12.2013
(51) Int. Cl.: H04B 10/272, G02B 6/255

(54) **An optical distribution system, a splicing handheld device, a kit for an optical distribution system and a method for the construction and managing of an optical distribution system**

(71) Applicant: Telefonica S.A., 28013 Madrid (ES)
(72) Inventor: Montalvo, Julio, 28013 Madrid (ES); Torrijos, José A., 28013 Madrid (ES); Marín, Carlos, 28013 Madrid (ES)
(74) Representative: Carlos Hernando, Borja

(57) **Abstract**

An optical distribution system, a splicing handheld device, a kit for an optical distribution system and a method for the construction and managing of an optical distribution system

The system comprises:
- an optical network and first and second remote optical devices (1211, 1220) connected to its ends;
- a RFID tag attached to one or more of the optical network ends; and
- a RFID tag reader (1311, 1315) arranged at the optical network end or at the optical device (1211, 1220) for reading the RFID tag and optically transmitting the read ID information through the optical network.

The splicing handheld device is adapted to perform an ID matching before splicing.

The kit comprises a fibre patch cord and an optical device (1211, 1220) which use RFID technology to read and optically transmit through the fibre patch cord RFID information.

The method comprises constructing the system of the invention.

## Description

### Field of the Art

The present invention generally relates, in a first aspect, to an optical distribution system, comprising the use of RFID technology for the identification of ends of an optical network of the optical distribution system, and particularly to a system comprising a RFID tag reader arranged for optically transmitting the read ID information through the optical network.

A second aspect of the invention generally relates to a splicing handheld device for splicing the free ends of two respective aligned optical fibres, and particularly to a splicing handheld device adapted for checking if the two optical fibres are the ones planned to be spliced.

A third aspect of the invention generally relates to a kit for an optical distribution system, comprising a fibre patch cord with a RFID tag attached to a connector thereof, and particularly to a kit comprising an optical device having a RFID tag reader for automatically reading the RFID tag and for optically transmitting the read information through the fibre patch cord.

A fourth aspect of the invention relates to a method for the construction and managing of the optical distribution system of the first aspect.

### Prior State of the Art

On the one hand, fibre networks and, more recently, Passive Optical Network (PON) deployments have become a huge challenge to infrastructure operators that need to efficiently and reliably manage a large number of fibre connections between active and passive equipment, not only inside Central Offices, but in the outside fibre plant and inside customer premises.

On the other hand, PON service provisioning suffers from relevant restrictions due to the inherent point-to-multipoint topology of these kinds of fibre networks. When an Optical Network Unit (ONU) is installed inside customer premises, two main challenges arise related to service provisioning:
- First, some mismatches between the customer premises identification and the Optical Line Terminal (OLT) which provides PON service coverage to the specific customer may take place due to PON inventory inconsistencies, which can be caused, for example, due to mistakes in manual records during network construction or even during network operation and maintenance. In these cases, it is required a mechanism to quickly detect this mismatch and efficiently solve the situation, so that the delay in service activation is reduced as much as possible and the ratio of service activations per day is optimized.
- Secondly, a manual intervention is typically required for saving the customer identifier (customer ID) inside an ONU, which is typically chosen from a pool of default units without specific configuration. The customer ID value is used by the OLT to authenticate the customer, and only once the customer ID value is saved inside the default ONU, the customer is authenticated by the OLT and gets access to the contracted PON services.

A method for ONU registration in a PON using a mobile terminal configured to collect the ONU identification and the customer identification and transmit both identifiers to a registration server is reported in [1], enhancing the customer authentication procedure in a PON.

Radio Frequency Identification (RFID) technology has been applied to the inventory management of the elements of copper cable networks [2] and also of the optical distribution network (ODN) in PONs. RFID passive tags can be installed in cable adaptors and connectors, tags having a forwarder unit that returns a tag reply with encoded ID data when an external tag reader transmits a radio frequency signal through the forwarder unit. RFID elements can also be powered via an antenna using RF wireless signals, which can be used for transmitting information to an integrated circuit, which could save at least part of the transmitted information in a memory. Due to the small size and low cost of the RFID elements and the possibility of encoding information inside them and read it using wireless tag readers, they are suitable for managing inventory systems in the construction and maintenance operations in electrical cable patch panels and in PON deployments, by attaching RF tags in the cable connectors and adapters [3], [4], [5]. Unique cable end and panel port identifiers embedded within RF tags, combined with means for reading these tags and comparing the connections between cables with a system database, allows checking in an automated way if the proper cable connections have been physically established according to the system database. A technique for remotely reading the RF tags of the two ends of fibre optic cables has also been reported by using electrically conductive elements all along the length of the cable [7].

A system for wirelessly collecting identity and operational data of small form factor pluggable optical modules is reported in [9]. This system is useful for reliability analysis and maintenance of the optoelectronic modules used in a fibre network, and the opto-electronic small form factor pluggable module disclosed therein comprises embedded identification, authorization and operational data of the optical module, which also contains monitoring devices and a wireless (RFID, Bluetooth, infrared, etc...) interface for communication with an external portable reader terminal. For an embodiment of [9], the portable reader terminal wirelessly gathers the embedded data inside the optical modules, and reports the gathered data to a management system through a Local or Wide Area Network. In the management system, the collected information from the optoelectronic modules can be used for maintenance and authorization purposes.

### Problems with existing solutions:

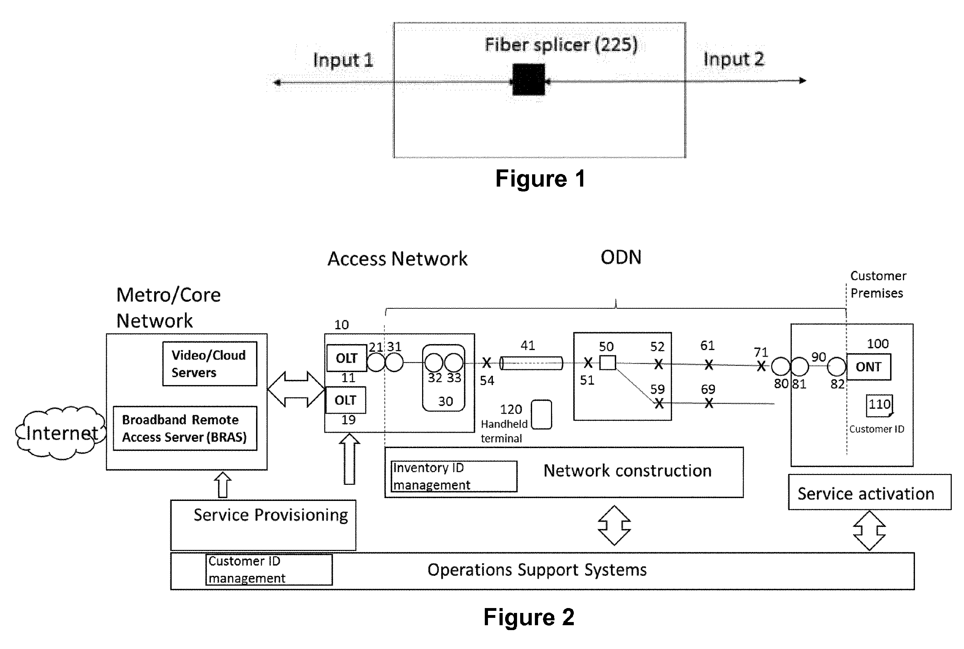

In a general fibre network, when a fibre splice is going to be performed during network construction or maintenance, a fibre splicer machine (225) is typically used, as shown in Figure 1. Two fibre ends (input 1 and input 2) are properly arranged (striped, cleaved and cleaned) so that they can be properly aligned and positioned in such a way that the machine can join the two fibre ends using heat (fusion splice).

The fibre splicer machine does not have any means for determining if an optical device is connected at the remote end of each of the input fibres. Typically, remote assistance from each remote fibre end of input 1 and input 2 fibres is used to confirm that the correct optical path is going to be established.

US2011/0081144 [3] and EP2306421A1 [4] Patent Applications by Zhao et al. describe a half-passive optical splitter module with capabilities which simplify and automate the fibre connection management during fibre network construction and maintenance, by avoiding manual recordings, which are liable to mistakes. Tag readers, sensors in fibre adapters for fibre connection states collection, as well as RFID tags in fibre adapters and connectors, are used so that automatic mapping between the fibre adapters IDs of the described half-passive optical splitter and the inserted fibre connector IDs is achieved. This way, the consistency of the Optical Distribution Network fibre connections can be guaranteed in an automated and potentially error-free way.

The inventions reported in [3], [4] are only related to passive optical splitter modules where an external power supply is required in order to perform the described management method. Moreover, the described method is only able to check that the connectors IDs and adapters IDs match between them according to the inventory requirements of the fibre infrastructure operator, but no information about the remote active optical equipment, such as OLT or ONU which are connected to the optical module, can be obtained, neither interaction between the optical splitter and the active equipment connected to the Passive Optical Network is possible.

Patents [2], [5], [6] disclose invention which also comprise the concept and the system for unique association between the two connectors of a cable, and also extends the concept of RFID tag identifiers to create a map of the physical locations and the connectivity of the components of telecommunication equipment by associating RFID tag identifiers to them. Nevertheless, the concepts reported in these inventions cannot ensure the connectivity between two remote optical devices when there are fusion splices or unmanaged optical connectors between them, such as an OLT and an ONT in the case of a PON, or when a fibre is spliced in the outside plant of any access, metro or core fibre network.

US7920764B2 Patent [7] by A.S. Kewitsch describes a system using RF tones for tracing fibre optic cables with at least a conductive element along their lengths and connectors with RFID tags at both ends of these electrically conductive fibre optic cables, thus achieving remote connector port identification. An overlay network of RFID tags and readers using the claimed traceable fibre optical cables for management of all physical point to point connections in a communications network is reported by the same inventor in [8]. These inventions require special fibre cables and are only applicable to point to point direct fibre connections, not being applicable to remote identification of fibre ends when fibre splices are made or when branching elements, such as optical power splitters, are used in an optical path, which is the case in PONs. The system of this invention does neither provide the way to obtain information about the optical devices that are communicated through the fibre optic cable, nor the services provided by the optical communication.

Patent US7856185B2 [9] allows a management system to wirelessly gather operational and identity data embedded in optoelectronic small form factor pluggable modules using portable terminal readers, which is useful for increasing the reliability analysis of optoelectronic module manufacturers, but the described technique and system are not able to gather information about the host units where the modules are inserted, neither about the optical fibre connections between the modules in order to check if they are correct according to the planned network design.

A system for remotely transmitting information by optical means to RFID tags attached to optical components and devices is described in [10], which enhances the management capabilities of RFID tags.

Commercial experiences of some of the concepts of the former inventions are described in the appendixes of the ITU-T L.64 Recommendation [11].

The fibre access network construction and service activation procedures and systems including several concepts of the prior art are described next with reference to Figure 2, in an illustrative example for a PON.

First, a Point of Presence (10) in the access network with OLTs (11...19) capable of providing fibre services is built. In most cases, OLTs are not installed at day 1, thus OLT emulators can be used to assist the construction of the ODN, involving the following elements:
- OLT receptable (21) is connected to an optical distribution frame through a fibre patch cord with connectors (31, 32). The patch cord is connected to the outside plant through the corresponding connector (33). In some concepts of the prior art, all the former connector identifiers may be managed via QR codes or RFID tags to automatically record the network inventory during network construction in a reliable and efficient way.
- The feeder fibre (41) and connector (33) are manually spliced in point (54).
- The feeder fibre (41) and optical splitter (50) are manually spliced in point (51).
- The same process involving additional manual splices in cascaded splitters can take place, until a final fibre drop connection is built, splicing one output of the optical splitter (50) in point (52) to a drop fibre, with possible additional splices in intermediate flexibility points (61), and the final drop fibre getting to the final flexibility point, where the drop fibre is finally spliced in point (71) to an Optical Fibre Termination Point (80) (OFTP) next or inside customer premises.

The connection between OLT receptacle (21) and the distribution frame connectors (31-32) can be identified by using the PON-ID maintenance capability defined in [12] from connector (32).

Similarly, the former splice connections in points (51), (54), etc..., can be identified by using the same PON-ID capability.

For these cases, a handheld terminal (120) in the prior art can be used in the point of presence (10), the ODN or even inside customer premises, in order to check that an OLT optical downstream signal exists with the specific PON-ID value.

Once the fibre is constructed and the PON coverage is available for a specific customer, the customer can contract the services. Service pre-provisioning can be performed, involving the required configuration in the OLT and Video/Cloud/Internet Servers of the Service Provider, taking into account the Customer ID management.

Once a service is contracted, the ONT can also be installed in the customer premises at a certain moment for service activation. A default ONT (100) without configuration is typically connected to the PON through a default fibre patch cord (90) and connectors (81-82). A Customer ID value (110) is assigned in the work order by the Operations Supports Systems (OSS), being this Customer ID manually recorded inside the ONT for customer identification. This Customer ID value (110) is typically managed manually, thus this process is error prone because a wrong customer ID value can be delivered to the customer premises and/or saved inside the ONT and/or delivered to the network provisioning systems. If this happens, there are not automated means described in the prior art to detect and solve this situation efficiently.

The method for ONU registration using a mobile terminal in communication with a registration server described in [1] helps automating the authentication of a customer in a PON by matching the ONU and customer identifiers and transmitting both parameters to a registration server. Nevertheless, this procedure relies in a communication network different than the PON, specifically a mobile network, which for certain operations may not be considered reliable enough. For example, mobile coverage may not be available at a certain customer premises location, or the message through the mobile network may delay to reach to the registration server, thus reducing the efficiency and reliability of the ONT registration method.

Once the service is provisioned for the customer ID in the OLT and all the elements in the Metro-Core network, and once the correct OLT authenticates the ONT through the correct customer ID value, then the customer is able to access the contracted services.

The methods and systems described in the prior art provide means for improving the efficiency and reliability of the construction and maintenance of the passive infrastructure of telecommunication networks. Nevertheless, further improvements can be achieved.

In particular, the need for remote assistance to check that the proper fibres are spliced can be avoided, thus allowing a reliable fibre splice in a single step without need for personnel sending some verification signal through fibre using additional maintenance devices, such as Light Emitting Diode (LED) devices.

Additionally, more automated and more reliable ONT registration means in PONs can be achieved.

### REFERENCES:

[1] Method for ONU registration in a Passive Optical Network, D. Hood and D. Alan, US Patent Application 2012/0294613 A1, Nov. 22, 2012.
[2] RFID patch panels and cables, Avaya Technology Corp., United States Patent, US 7,468,669 B1, 2008.
[3] Optical Element Module, Optical Node, Optical Distribution System and Management Method, Zhao et al., United States Patent Application Publication, US 2011/0081144 A1, 2011.
[4] An optical Assembly module, optical node, optical distribution system and the management method thereof, Zhao et al., European Patent Application 09771929.8, 2011.
[5] System for mapping connections using RFID function, Corning Cable Systems LLC, US Patent 7,772,975 B2, Aug. 10, 2010.
[6] RFID systems and method for optical fibre network deployment and maintenance, Corning Cable Systems LLC, US Patent 7,760,904 B1, Jul. 20, 2010.
[7] Electrically traceable and identifiable fibre optic cables and connectors, A. S. Kewitsch, US 7,920,764 B2 Patent, Apr. 5, 2011.
[8] Radio frequency identification overlay network for fibre optic communication systems, A. S. Kewitsch, US Patent 2010/0098425, Apr. 22, 2010.
[9] Wireless monitoring of optoelectronic modules and network components, Emcore Corporation, US Patent 7,856,185 B2, Dec. 21, 2010.
[10] Optically addressed RFID elements, Corning Cable Systems LLC, US Patent 7,547,150 B2, Jun. 16 2009.
[11] ITU-T L.64: ID tag requirements for infrastructure and network elements management, Telecommunication Standardization Sector of ITU, 2012.
[12] ITU-T G.984.3 GPON transmission convergence layer specification, Amendment 3, 04/2012.
[13] Method and device for recognizing optical splitter and optical splitter ports, Huawei Technologies Co. Ltd., European Patent Application 10826067.0, 2010.
[14] ITU-T L.66: Optical fibre cable maintenance criteria for in-service fibre testing in access networks, 05/2007.

### Description of the Invention

It is an object of the present invention to provide an alternative to the prior state of the art, which covers the gaps found therein, doing without the need for remote assistance to properly identify optical fibres, in order to splice them or for other purposes.

To that end, the present invention relates, in a first aspect, to an optical distribution system, comprising:
- an optical network including respective first and second optical network ends and first and second optical devices connected thereto, remotely placed with respect to each other;
- a RFID tag attached to at least said first optical network end; and
- a RFID tag reader configured and arranged for reading said at least one RFID tag.

Contrary to the known optical distribution system, in the one proposed by the first aspect of the present invention the RFID tag reader is arranged at said first optical network end or at said first optical device, and configured for automatically reading ID information included in said RFID tag and for optically transmitting, directly or with the cooperation of intermediate entities of the first optical device, said ID information through said optical network to said second optical device, in the form of a first optical signal.

For an embodiment, the system of the first aspect of the invention further comprises:
- a RFID tag attached to said second optical network end; and
- a RFID tag reader arranged at said second optical network end or at said second optical device, and configured for reading ID information included in said RFID tag and for optically transmitting, directly or with the cooperation of intermediate entities of the second optical device, said ID information through said optical network to said first optical device, in the form of a second optical signal.

For a preferred embodiment, the optical network is a Passive Optical Network (PON), the first optical device is an Optical Network Termination (ONT) and the second optical device is an Optical Line Terminal (OLT), wherein the RFID tag reader is integrated into the ONT and the RFID tag is embedded into or attached to a fibre patch cord, o a connector thereof, connected to the ONT, and wherein said ID information included in the RFID tag comprises uniquely associated customer ID and connector ID allowing the OLT, upon the reception of said ID information included in the first optical signal, remotely recognize the customer and authorize the access to a service provided by the OLT.

According to an embodiment, the RFID tag is attached to or embedded into a connector provided at an end of a fibre patch cord of the first and/or second optical network end, wherein said connector is coupled to an optical port receptacle of the first or second optical device.

Regarding the above mentioned intermediate entities of the first and/or second optical devices, these are, for an embodiment:
- a transmission convergence layer unit configured and arranged for receiving and storing in memory at least the ID information included in the RFID tag of first or second optical network end;
- a communication interface intercommunicating the RFID tag reader with said transmission convergence layer unit to provide the latter with said ID information; and
- an optical transceiver configured and arranged, in cooperation with an operation and maintenance layer, for transmitting through said optical port receptacle the information stored in memory at the transmission convergence layer unit.

For an alternative embodiment, the intermediate entities of the first and/or second optical devices are:
- an ID optical transceiver configured and arranged for receiving, storing in memory and transmitting, in the form of an additional optical signal, at least the ID information included in the RFID tag of first or second optical network end; and
- an optical multiplexer with a first input connected to an output of an existing data optical transceiver, a second input connected to an output of said optical transceiver, and an output connected to said optical port receptacle;
wherein the ID optical transceiver and the optical multiplexer are configured and arranged to for transmitting through the optical port receptacle said additional optical signal.

The RFID tag reader comprises, for a variant of both of the immediately above mentioned two embodiments, a memory storing a unique receptacle identifier, the intermediate entities being configured for transmitting also said unique receptacle identifier through said optical port receptacle together with the RFID tag ID information.

For another embodiment, the system of the first aspect of the invention comprises a handheld device comprising:
- receiving means configured and arranged for receiving the first and second optical signals at the free ends of respective optical fibres to be spliced to each other;
- processing means for at least reading the ID information included in the optical signals received by the receiving means and checking if they match with two corresponding IDs of optical fibres planned to be spliced, or of optical devices connected thereto, and generating a signal on the basis of the result of said matching; and
- splicing means for splicing said optical fibres free ends, wherein said splicing means are operated manually and/or at least in part automatically, and wherein said signal representing the result of said matching is at least one of: an alarm signal indicating to an operator if there is authorization to perform the splicing, a blocking electrical signal delivered to said splicing means to block their operation if there is not ID matching and a driving signal delivered to said splicing means to automatically drive them to perform the splicing if there is ID matching.

A second aspect of the invention relates to a splicing handheld device comprising splicing means for splicing the free end of two respective aligned optical fibres.

The splicing handheld device of the second aspect of the invention differs from the already known splicing handheld devices, in that:
- it further comprises:
   - receiving means configured and arranged for receiving respectively, from remote locations, first and second optical signals at the free ends of respective optical fibres to be spliced to each other, wherein said first and second optical signals contain ID information related to, respectively, a first optical network end or a first optical device connected thereto and a second optical network end or a second optical device connected thereto; and
   - processing means for at least reading the ID information included in the optical signals received by the receiving means and checking if they match with two corresponding IDs of optical fibres planned to be spliced, or of optical devices connected thereto, and generating a signal on the basis of the result of said matching;
- and in that the splicing means for splicing said optical fibres free ends are operated manually and/or at least in part automatically by control means of the splicing handheld device, wherein said signal representing the result of said matching is at least one of: an alarm signal indicating to an operator if there is authorization to perform the splicing, a blocking electrical signal delivered to said control means of the splicing means to block their operation if there is not ID matching and a driving signal delivered to said control means of the splicing means to automatically drive the latter to perform the splicing if there is ID matching.

For an embodiment, the splicing handheld device comprises, connected to said processing means, communication means configured for at least receiving a work order with said IDs of optical fibres planned to be spliced, or of optical devices connected thereto, from an Operations Support System (OSS) or other external control entity.

A third aspect of the invention relates to a kit for an optical distribution system, comprising:
- a fibre patch cord;
- at least one RFID tag attached to a first connector of said fibre patch cord; and
- a RFID tag reader configured and arranged for reading the ID information embedded in said at least one RFID tag.

Contrary to the known kits, the one of the third aspect of the invention further comprises an optical device having an optical port receptacle into which connect said first connector, said optical device comprising said RFID tag reader, the latter being configured for automatically reading ID information included in said RFID tag and for optically transmitting, directly or with the cooperation of intermediate entities of the optical device, said ID information through said fibre patch cord, in the form of an optical signal.

For an embodiment, the optical device is an ONT and said ID information included in the RFID tag comprises uniquely associated customer ID and connector ID.

A fourth aspect of the invention relates to a method for the construction and managing of an optical distribution system, comprising constructing the system of the first aspect of the invention by performing at least the following steps:
- providing an optical network including respective first and second optical network ends and first and second optical devices, remotely placed with respect to each other;
- attaching a RFID tag to at least said first optical network end;
- providing a RFID tag reader arranged at said first optical network end or at said first optical device, wherein said RFID tag reader is configured and arranged for reading said at least one RFID tag; and
- automatically reading, with said RFID tag reader, ID information included in said RFID tag and optically transmitting, directly or with the cooperation of intermediate entities of the first optical device, said ID information through said optical network to said second optical device, in the form of a first optical signal.

For an embodiment, the method of the fourth aspect of the invention comprises using the handheld device of the system of the first aspect for performing the following steps:
- receiving the first and second optical signals at the free ends of respective optical fibres to be spliced to each other;
- reading the ID information included in the received optical signals and checking if they match with two corresponding IDs of optical fibres planned to be spliced, or of optical devices connected thereto; and
- splicing said optical fibres free ends if the result of said matching is positive, where said splicing is performed manually or automatically

Once constructed, the method of the fourth aspect of the invention also comprises managing the system of the first aspect. That management is performed, for an embodiment implemented in the abovementioned preferred embodiment of the system of the first aspect of the invention, by means of the OLT remotely recognizing the customer of the ONT and authorize the access to a service provided by the OLT based on the uniquely associated customer ID and connector ID included in the ID information of the first optical signal received at the OLT.

### Brief Description of the Drawings

The previous and other advantages and features will be better understood from the following detailed description of embodiments, with reference to the attached drawings, which must be considered in an illustrative and non-limiting manner, in which:
Figure 1 is a conventional fibre splicer machine;
Figure 2 schematically shows a fibre access network construction and service activation procedures and systems including several concepts of the prior art, in an illustrative example for a PON;
Figure 3 schematically shows part of the system of the first aspect of the invention, for two respective embodiments, particularly the optical device of the system for two proposed novel optical ports schematics: in-band (a) and out-of-band (b) RF tag ID optical transmission without Receptacle ID;
Figure 4 is analogous to Figure 3, but for RF tag ID optical transmission with Receptacle ID; and
Figure 5 schematically shows the portable handheld terminal of the second aspect of the invention or the one included in the system of the first aspect of the invention, while reading the RFID from the optical signal (a) and authorizing a fibre splice (b) when the RF ID tags read from both inputs correspond to the specific work order from the OSS.

### Detailed Description of Several Embodiments

For some embodiments of the present invention, fibre connector IDs are managed using RFID technology embedded in the fibre ports of optical devices that are to be connected through optical fibre splices. Each optical device uses RFID tag readers for automatically obtaining the fibre connector IDs and/or the fibre receptacle IDs and will send the ID values transmitting an optical signal through the optical fibre connected to the fibre receptacle, so that remote optical devices can read the ID values from the received optical signal.

When a work order is commanded by the OSSs of a network operator demanding a fibre splice in the fibre plant, a new handheld terminal is used, denominated above as splicing handheld device. This new handheld terminal is able to read the fibre receptacle IDs of both remote optical devices, and/or the IDs of the fibre connectors connected thereto, and guarantee that they match the IDs planned by the OSS. This handheld terminal includes also a fibre splicer block to perform the fusion splice between the two fibre ends in a reliable way.

In the case of PONs, the use of RF-ID tag readers integrated in the ONTs is used for achieving an automated customer ID provisioning without customer ID human manipulation. ONTs capable of reading the RF tag (containing customer ID and, optionally, connector ID) embedded into a fibre patch cord are to be used during service activation inside customer premises, being this ONT also capable of transmitting said customer and, optionally, connector IDs (uniquely associated by the OSS) to the PON using an optical signal, so that the OLT can remotely recognize the customer and authorize the access to the service.

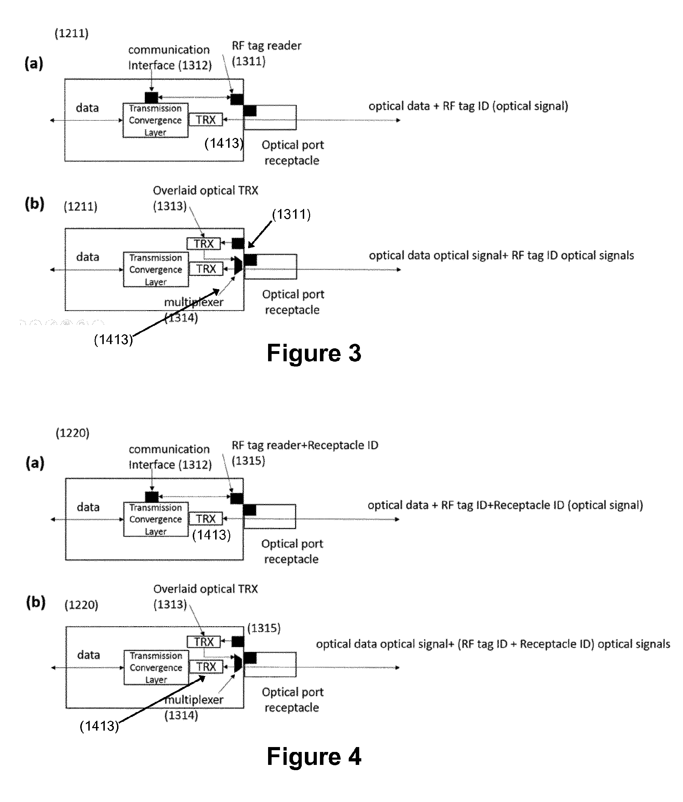

As shown in Figure 3, for an embodiment of the system of the first aspect of the invention, at least one optical device (1211) is used, with an optical port, including:
- a RFID tag reader (1311) capable of reading the ID value of the RFID tag of the connector (not shown) inside optical fibre port receptacle, and
- means for transmitting said read ID value of the RFID tag to the fibre attached to said connector through an optical signal.

In the embodiment shown in Figure 3(a), the RFID tag reader (1311) sends the RFID tag information read from the RF tag of the connector inside the receptacle, through any short-reach communication interface (1312), to the Transmission Convergence Layer circuitry of said optical device (1211). Examples of these communication interfaces (1312) are SPI (Serial Peripheral Interface), 12C/TWI (I-Two-C/Two Wire Interface), USI (Universal Serial Interface), UART/USART (Universal Asynchronous Receiver/Transmitter/Universal Synchronous Asynchronous Receiver/Transmitter) and USB (Universal Serial Bus), among others. When the circuitry of the transmission convergence layer of the optical device (1211) receives the read RFID, it is able to save it in a memory so that the Operation and Maintenance (O+M) layer of the device (1211) uses it to transmit the data frames through the optical transceiver (TRX), which typically includes a Laser Diode (LD) and a photo-detector.

For the embodiment of Figure 3(b), the RFID tag information read from the RFID tag of the connector inside the optical port receptacle is delivered to an additional module or transceiver (1313) of the optical device (1211), which comprises electronic circuitry capable of storing and transmitting the RFID value through an additional optical signal, which is multiplexed to the existing data signal (coming from transceiver 1413) through an optical multiplexer (1314).

For the embodiments of Figures 4 (a) and (b), the optical device (1220) differs from the optical device (1211) of, respectively, Figures 3 (a) and (b), in that it includes a new module (1315) which includes the RF tag reader capability with the additional feature of having a memory (not shown) storing an unique receptacle identifier (ID). In this case, both the Receptacle ID and the RFID tag information read from the optical connector (not shown) inserted in the receptacle are used by optical device (1220), i.e. are read and transmitted through the optical port receptacle and the fibre cord connected thereto.

It is assumed that, for some embodiments, the OSS has a database with unique optical fibre connector identifiers and, optionally, optical port receptacle identifiers, of all the fibres and optical devices of the fibre network. It is also assumed that, for some embodiments, the OSS uses these connector and receptacle IDs to build a fibre connectivity map between optical network devices. When two specific devices need to be connected through optical fibre, a work order is commanded, including at least the connector IDs (and optionally the receptacle IDs) so that a technician receives the information required to perform the action in the field.

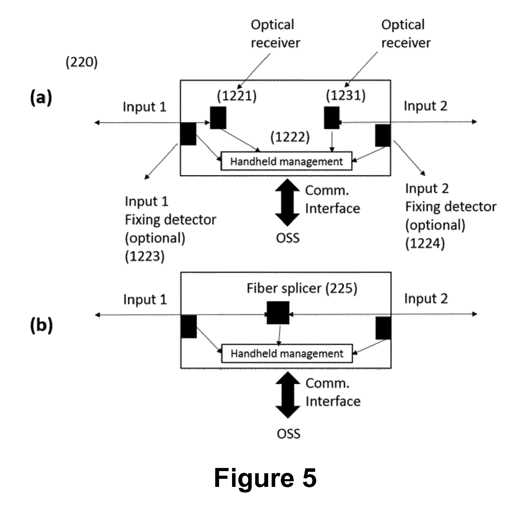

In order to allow reliable and automated fibre network construction and maintenance, the invention also includes a new portable splicing handheld terminal (220), i.e. the splicing handheld device of the second aspect of the invention or the one included in the first aspect of the invention, which is schematically shown in Figures 5 (a) and (b), and is in communication with the Operations and Support Systems (OSS) of a fibre network or infrastructure provider through a communication interface (typically wireless, such as Wi-Fi, 3G or LTE; or fixed, typically Fast/Gigabit Ethernet).

This handheld terminal (220) is used for fibre splicing in a fibre network when a specific work order (which is received in the terminal 220 before or during the fibre splice) is commanded by the OSS of a fibre network operator. As it will be described, this terminal (220), when using optical devices as (1211) or (1220), ensures that the correct remote optical devices are being connected through the fibre splice, avoiding the need for remote assistance from the remote sites where the optical devices may be located. It also allows updating the connectivity map between optical devices in the OSS database in an automatic way.

Figures 5(a) and (b) represent this new splicing handheld terminal (220) in different steps of its operation.

In a first step, see Figure 5(a), the two fibre ends to be joint (input 1 and input 2) are fixed to the handheld terminal (220). Typically, the fibre ends will be bare fibre without connectors.

Next, the fibres are introduced in respective optical modules (1221, 1231), using for example bare fibre adaptors, these modules being capable of detecting the optical signal transmitted through remote optical devices (1211) or (1220) connected at the remote ends of the optical fibres input 1 and input 2. As previously described, these remote optical devices (1211, 1220) are sending, typically in a periodical way for maintenance purposes, optical signals containing the information of the connector ID values (and optionally the receptacle ID values), as described in Figure 3 and Figure 4. When the fibres at input 1 and input 2 are connected to the respective optical receivers (1221) and (1231), the terminal (220) is capable of comparing the two receptacle ID values with the expected values commanded by the OSS in the specific work order, through the unit indicated as "handheld management" (called in a previous section as processing means) which is bidirectionally communicated with the OSS in order to receive the work orders therefrom and communicate the result of the ID matching thereto.

If the two ID values match the values expected in the specific OSS work order, then the terminal (220) will authorize the fibre splice, via the Handheld management unit, and the splice procedure will be performed, see Figure 5(b) (manually or automatically). After the correct fibre splice, the OSS will receive (form the handheld management unit) the confirmation that the fibre splice has been done and will update the fibre network connectivity map including the optical connection between the two optical devices with the corresponding connector and, optionally, receptacle IDs. Optionally, fixing detectors (1223, 1224) can be used to check that the fibres at input 1 and input 2 have not been replaced by different ones after reading the receptacle IDs.

In the case of a PON with feeder fibre protection, this procedure can be done to guarantee that the correct backup feeder fibre is spliced, if some ONT is already in service in the PON, provided that said ONT is transmitting the connector identifier value to the OLT through an optical signal in the fibre. In this case, the handheld terminal (220) will read both the optical signals from the OLT and said ONT and check that the connector values are in the list of connectors of the PON with OLT connector; if a wrong optical splitter is selected for splicing to feeder fibre, then the connector ID value will not be in the list of connectors of said PON, then the splice will be denied until the correct power splitter is selected for splicing.

The same procedure can be used when a fibre break is being repaired by performing a fibre splice within an active PON.

Thus the combined use of:
- first, optical devices capable of reading the ID tags attached to the fibre connectors coupled to their fibre port receptacles, and/or ID tags attached to said fibre port receptacles, and capable of optically transmitting them to the fibre connected to its receptacle; and
- second, a new handheld terminal capable of checking the connector IDs of the remote devices at the remote ends of the fibres to be spliced, guaranteeing that the correct optical devices are being connected through a fibre splice according to the OSS work order increases over the state of the art, the reliability of a fibre network construction with fibre splices.

In the case of a PON, the optical devices (1211) or (1220) can be an OLT or an ONT. If the splicing handheld device (220) is used when splicing a backup feeder fibre in a feeder-fibre protected PON, then the terminal (220) will read the connector IDs of the OLT and ONT and will check if they are the expected values by the OSS. This way, the correct fibre splice will be done avoiding mistakes due to wrong inventory information, typically appearing when manual procedures are used during fibre network construction and maintenance.

In a specific embodiment of the invention, for the specific case of GPON (Gigabit Passive Optical Network (ITU-T G.984)) and XG-PON systems (ITU-T G.987), the described method for reliable fibre splice can be performed if, instead of transmitting the OLT port connector ID or receptacle ID, the standard PON-ID skill is used.

In another specific embodiment, the RFID tag value in the fibre connector inserted inside the ONT receptacle could be transmitted in an standard upstream PLOAM (Physical Layer Operation, Administration and Maintenance) message of the GPON protocol, for example in a Serial Number or PLOAM password message. If the RFID tag value contains a customer ID information saved into the RFID tags of a fibre patch cord used for ONT installation inside customer premises, the OLT can authenticate the remote ONT via the customer ID saved in the connector ID tags and provide the PON services to the customer. Let us consider that a work order associated to customer ID is commanded by the OSS in order to install an ONT inside customer premises for service activation. A default ONT without information of the customer is delivered to the customer premises (the customer may buy this ONT in a store or receive it via mail or any transport service).

For an embodiment, a default fibre patch cord with RFID tags is used to connect the Optical Fibre Termination Point (OFTP) of the fibre operator to the ONT. Before or during ONT installation, the customer ID value of the work order will be saved inside ID tags or associated to existing RFID tag information, for example using portable RFID tag writers and RFID tags with memories in the connectors of patch cord.

The ONTs of the present invention differ from prior art ONTs in that the ones of the present invention are capable of reading the connector ID of the connector inside its fibre receptacle, and transmitting said connector ID value through an optical signal to the PON. When a standard parameter such as Serial Number or PLOAM password is transmitted by the ONTs, OLTs are able to read the connector ID value transmitted by each ONT and use said ID value to authenticate the customer. Only when the OLT and customer ID are the correct ones, as planned by the OSS, then the ONT will be allowed to provide PON services inside the customer premises according to the services assigned to customer ID. If, in a topology as shown in Figure 1 but modified by substituting the ONT (100) and OLTs (11...19) with the ones of the present invention, a wrong customer ID value, for example different to (110), is received by the OLT in connector (21), then a service activation failure is automatically identified (wrong customer premises with high probability).

Thus, the use of the ONTs of the present invention provide a new automated way of customer provisioning in a PON without human manipulation of the customer ID or any related parameter, opening the way to full ONT self-installation.

For an embodiment of the kit of the third aspect of the present invention, the kit is a self-installing ONT kit comprising
- a fibre patch cord with the customer ID (or a univoquely related ID) embedded into at least one of the two RFID tags of the two fibre patch cord connectors.
- an ONT capable of reading the RFID tag of said fibre patch cord and transmit the customer ID value comprised in the connectors RFID tags to the PON through an optical signal. In a preferred embodiment, the customer ID value is the Serial Number or PLOAM password field value pre-provisioned in the OLT port, and the optical signal is the PON upstream data signal.

In another embodiment, in the specific case of a PON, OLTs and ONTs with the structure (1220) of Figures 4(a) and (b) may use overlaid wavelengths in the ITU-T L.66 recommendation or the enhancement band described in ITU-T G.984.5.

### Advantages of the Invention:

The proposed invention enhances the reliability of fibre network construction and maintenance in prior art, helping to identify in an automated and more effective way network construction inconsistencies. Specifically, the proposed invention avoids several mistakes that can be made during fibre splicings in the optical distribution network of a PON or any optical link between two devices in a metro/core fibre network. It also avoids the need for personnel and test equipment (such as LED transmitters) in the remote ends of fibres to be spliced that were required in the state of the art to confirm that the correct fibres are to be spliced. With the present invention, the splice can be reliably made in a single step without requiring additional devices and personnel in the remote sites.

The proposed invention also allows automated and reliable ONT authentication and PON service activation, avoiding errors in manual procedures when saving customer ID values inside default ONTs.

The proposed invention allows self-installing ONT kits without need for manual manipulation of customer ID values inside customer premises during service activation. It also avoids the need for any additional component or device different than a fibre patch cord and an ONT for self-installing ONT kits inside customer premises, also avoiding the need for a different communication channel than the PON for customer authentication (while in the prior art additional devices, such as mobile terminals, and other communication channels, such as a mobile network, were required).

In conclusion, the proposed invention provides a new method, system, device and kit for more reliable and automated fibre network construction and maintenance, as well as service activation in PONs, reducing the operational costs of network construction and maintenance and increasing the ratio of customer activations per day of a PON service provider.

A person skilled in the art could introduce changes and modifications in the embodiments described without departing from the scope of the invention as it is defined in the attached claims.

## Claims

1. An optical distribution system, comprising:
- an optical network including respective first and second optical network ends and first and second optical devices (1211, 1220) connected thereto, remotely placed with respect to each other;
- a RFID tag attached to at least said first optical network end; and
- a RFID tag reader (1311, 1315) configured and arranged for reading said at least one RFID tag;
wherein the system is **characterized in that** said RFID tag reader (1311, 1315) is arranged at said first optical network end or at said first optical device (1211, 1220), and configured for automatically reading ID information included in said RFID tag and for optically transmitting, directly or with the cooperation of intermediate entities of the first optical device (1211, 1220), said ID information through said optical network to said second optical device (1211, 1220), in the form of a first optical signal.

2. The system of claim 1, further comprising
- a RFID tag attached to said second optical network end; and
- a RFID tag reader (1311, 1315) arranged at said second optical network end or at said second optical device (1211, 1220), and configured for reading ID information included in said RFID tag and for optically transmitting, directly or with the cooperation of intermediate entities of the second optical device (1211, 1220), said ID information through said optical network to said first optical device (1211, 1220), in the form of a second optical signal.

3. The system of claim 1 or 2, wherein said optical network is a Passive Optical Network (PON), said first optical device (1211, 1220) is an Optical Network Termination (ONT) and said second optical device (1211, 1220) is an Optical Line Terminal (OLT), wherein said RFID tag reader (1311, 1315) is integrated into said ONT and said RFID tag is embedded into or attached to a fibre patch cord, o a connector thereof, connected to said ONT, and wherein said ID information included in the RFID tag comprises uniquely associated customer ID and connector ID allowing said OLT, upon the reception of said ID information included in said first optical signal, remotely recognize the customer and authorize the access to a service provided by the OLT.

4. The system of any of the previous claims, wherein said RFID tag is attached to or embedded into a connector provided at an end of a fibre patch cord of the first and/or second optical network end, wherein said connector is coupled to an optical port receptacle of the first or second optical device (1211, 1220).

5. The system of claim 4, wherein said intermediate entities of at least one of said first and second optical devices are:
- a transmission convergence layer unit configured and arranged for receiving and storing in memory at least the ID information included in the RFID tag of first or second optical network end;
- a communication interface (1312) intercommunicating the RFID tag reader (1311) with said transmission convergence layer unit to provide the latter with said ID information; and
- an optical transceiver configured and arranged, in cooperation with an operation and maintenance layer, for transmitting through said optical port receptacle the information stored in memory at the transmission convergence layer unit.

6. The system of claim 4, wherein said intermediate entities of at least one of said first and second optical devices are:
- an ID optical transceiver (1313) configured and arranged for receiving, storing in memory and transmitting, in the form of an additional optical signal, at least the ID information included in the RFID tag of first or second optical network end; and
- an optical multiplexer (1314) with a first input connected to an output of an existing data optical transceiver, a second input connected to an output of said optical transceiver (1313), and an output connected to said optical port receptacle,
wherein said ID optical transceiver (1313) and said optical multiplexer (1314) are configured and arranged to for transmitting through the optical port receptacle said additional optical signal.

7. The system of claim 5 or 6, wherein said RFID tag reader (1311, 1315) comprises a memory storing a unique receptacle identifier, said intermediate entities being configured for transmitting also said unique receptacle identifier through said optical port receptacle together with the RFID tag ID information.

8. The system of claim 2, further comprising a handheld device (220) comprising:
- receiving means (1221, 1231) configured and arranged for receiving said first and second optical signals at the free ends of respective optical fibres to be spliced to each other;
- processing means for at least reading the ID information included in the optical signals received by the receiving means (1221, 1231) and checking if they match with two corresponding IDs of optical fibres planned to be spliced, or of optical devices connected thereto, and generating a signal on the basis of the result of said matching; and
- splicing means for splicing said optical fibres free ends, wherein said splicing means are operated manually and/or at least in part automatically, and wherein said signal representing the result of said matching is at least one of: an alarm signal indicating to an operator if there is authorization to perform the splicing, a blocking electrical signal delivered to said splicing means to block their operation if there is not ID matching and a driving signal delivered to said splicing means to automatically drive them to perform the splicing if there is ID matching.

9. A splicing handheld device (220), comprising splicing means for splicing the free end of two respective aligned optical fibres, wherein the device is **characterized in that** it further comprises:
- receiving means (1221, 1231) configured and arranged for receiving, from remote locations, first and second optical signals at the free ends of respective optical fibres to be spliced to each other, wherein said first and second optical signals contain ID information related to, respectively, a first optical network end or a first optical device (1211, 1220) connected thereto and a second optical network end or a second optical device (1211, 1220) connected thereto; and
- processing means for at least reading the ID information included in the optical signals received by the receiving means (1221, 1231) and checking if they match with two corresponding IDs of optical fibres planned to be spliced, or of optical devices connected thereto, and generating a signal on the basis of the result of said matching;
and **in that** said splicing means for splicing said optical fibres free ends are operated manually and/or at least in part automatically by control means of the splicing handheld device, wherein said signal representing the result of said matching is at least one of: an alarm signal indicating to an operator if there is authorization to perform the splicing, a blocking electrical signal delivered to said control means of the splicing means to block their operation if there is not ID matching and a driving signal delivered to said control means of the splicing means to automatically drive the latter to perform the splicing if there is ID matching.

10. The splicing handheld device of claim 9, wherein said splicing handheld device comprises, connected to said processing means, communication means configured for at least receiving a work order with said IDs of optical fibres planned to be spliced, or of optical devices connected thereto, from an Operations Support System (OSS) or other external control entity.

11. A kit for an optical distribution system, comprising:
- a fibre patch cord;
- at least one RFID tag attached to a first connector of said fibre patch cord; and
- a RFID tag reader configured and arranged for reading said at least one RFID tag;
wherein the kit is **characterized in that** it further comprises an optical device (1211, 1220) having an optical port receptacle into which connect said first connector, said optical device (1211, 1220) comprising said RFID tag reader, the latter being configured for automatically reading ID information included in said RFID tag and for optically transmitting, directly or with the cooperation of intermediate entities of the optical device (1211, 1220), said ID information through said fibre patch cord, in the form of an optical signal.

12. The kit of claim 11, wherein said optical device is an ONT and wherein said ID information included in the RFID tag comprises uniquely associated customer ID and connector ID.

13. A method for the construction and managing of an optical distribution system, comprising constructing the system of any of claims 1 to 8 by performing at least the following steps:
- providing an optical network including respective first and second optical network ends and first and second optical devices (1211, 1220), remotely placed with respect to each other;
- attaching a RFID tag to at least said first optical network end;
- providing a RFID tag reader (1311, 1315) arranged at said first optical network end or at said first optical device (1211, 1220), wherein said RFID tag reader (1311, 1315) is configured and arranged for reading said at least one RFID tag; and
- automatically reading, with said RFID tag reader, ID information included in said RFID tag and optically transmitting, directly or with the cooperation of intermediate entities of the first optical device (1211, 1220), said ID information through said optical network to said second optical device (1211, 1220), in the form of a first optical signal.

14. The method of claim 13, comprising using the handheld device (220) of the system of claim 8 for performing the following steps:
- receiving said first and second optical signals at the free ends of respective optical fibres to be spliced to each other;
- reading the ID information included in the received optical signals and checking if they match with two corresponding IDs of optical fibres planned to be spliced, or of optical devices connected thereto; and
- splicing said optical fibres free ends if the result of said matching is positive.

15. The method of claim 13, comprising, in the system of claim 3, the OLT remotely recognizing the customer of the ONT and authorize the access to a service provided by the OLT based on the uniquely associated customer ID and connector ID included in the ID information of the first optical signal received at the OLT.
